# DEMANDE DE BREVET EUROPEEN

(11) **EP 0 733 722 A1**
(43) Date de publication de la demande: **25.09.1996**
(21) Numéro de dépôt: 96400626.6
(22) Date de dépôt: 22.03.1996
(51) Int. Cl.: C23C 22/62

(54) **Procédé et solution de passivation chimique pour les surfaces d'un générateur nucléaire de vapeur**

(30) Priorité: 22.03.1995 US 408670
(71) Demandeur: FRAMATOME Société Anonyme, 92084 Paris la Défense Cédex (FR)
(72) Inventeur: Jevec, John M. Mr., Uniontown, Ohio 44685 (US); Dow, Randall P. Mr., Lynchburg, VA 24502 (US)
(74) Mandataire: Armengaud Ainé, Alain

(57) **Abrégé**

Un procédé pour passiver les surfaces d'un générateur nucléaire de vapeur et une solution à cette fin inclut l'EDTA et le peroxyde d'hydrogène dans une gamme de températures située entre 37 °C et 49 °C. La solution est ajustée pour présenter un pH compris entre environ 9,2 et 9,5 et elle est utilisée sur les surfaces pendant deux heures ou plus pour passiver ces dernières.

## Description

### Domaine de l'invention

La présente invention se rapporte, de façon générale, à une technique de passivation, et en particulier, à un nouveau processus et à une solution pour passiver des surfaces métalliques, dans un générateur nucléaire de vapeur.

### Description de l'art antérieur

La passivation peut être définie en termes simples comme un processus qui entraîne une perte de réactivité dans certains environnements chimiques. Une discussion détaillée de la passivation peut être trouvée dans le M.G. Fontana et Greene, Corrosion Engineering, seconde édition, New-York, New-York ; McGraw (Hill, 1978, PP 319 0 324.

Plusieurs points importants sont apportés dans cette référence. En premier lieu, il est évident que la passivation est un état où la corrosion d'un métal dans l'environnement en question est très faible. En second lieu, la passivation est relativement instable et est spécifique de cet environnement. Il est par conséquent important de comprendre le problème que pose l'application d'une solution de passivation après un nettoyage chimique.

Après avoir été nettoyé chimiquement avec des acides ou d'autres solvants conçus pour éliminer les oxydes métalliques, les surfaces métalliques, spécialement les aciers à base de fer, sont usuellement dans un état très actif, dans lequel elles sont sujettes à une oxydation rapide en présence d'air. Cette situation correspond souvent à ce qui est appelé "rouille rapide" ou "post-rouille".

L'objectif normal d'une passivation après nettoyage chimique est d'éviter cet effet de rouille rapide.

Les solutions de passivation sont généralement orientées vers des matériaux tels que des aciers à base de fer. Les potentiels de passivation d'alliages à base de nickel, tels que l'Inconel 600, le Monel 400, l'Incoloy 800 ou l'Inconel 690, sont bien inférieurs à celui du fer. Ces alliages à haute teneur en nickel sont essentiellement auto-passivant, formant spontanément un film d'oxyde protecteur lorsqu'ils sont exposés à l'air. La solution de passivation pour nettoyage chimique a pour but d'éviter un effet de rouille rapide sur les surfaces du générateur de vapeur après nettoyage chimique.

Ceci devient spécialement important dans le cas où un travail de maintenance supplémentaire est requis, lequel conduit à ce que les surfaces nettoyées soient exposées à l'air. Une fois que les unités nettoyées sont remises en fonctionnement, les matériaux subissent un environnement différent. La couche de passivation, après nettoyage chimique, n'est plus suffisante. Le processus chimique de l'eau utilisée pendant le fonctionnement est conçu pour développer une passivation des surfaces métalliques dans les conditions de fonctionnement d'une installation de générateur de vapeur.

Le procédé EPRI/SGOG utilise une solution d'hydrazine à haute température (93 °C/200 °F), dans une étape finale de passivation après nettoyage chimique des générateurs nucléaires de vapeur. La solution de passivation EPRI/SGOG contient, approximativement, 200 ppm d'hydrazine, le pH étant ajusté à environ 10,2 avec de l'ammoniaque.

On a démontré que cette solution fournit une couche passive appropriée après nettoyage chimique (R.D. Martin et W.P. Banks, "Electromechanical Investigation of Passivating Systems," Proceedings of the 35th IWC, Pittsburgh, PA, 1974, pp. 169 à 179 et R.D. Martin et W.P. Banks, "Electromechanical Investigation of Passivating Mild Steel Surfaces", Materials Performance, Vol. 14, N° 9, 1975, pp 33 à 37). Cependant, on observe que si une petite quantité de cuivre est laissée dans le générateur de vapeur, elle tendra à se plaquer sur les surfaces de celui-ci pendant cette phase de passivation.

Le brevet U.S. 4 654 200 décrit un procédé spécifique pour l'extraction de radium à partir de résidus de traitement de l'uranium par chélation avec de l'EDTA dans des conditions de réduction forte. La présente invention n'est pas applicable à l'industrie de l'uranium et est appliquée dans des conditions d'oxydation (peroxyde d'hydrogène), et non pas dans une situation de forte réduction, spécifiée dans ce brevet. Le brevet ne traite pas de la passivation des surfaces en acier.

Le brevet U.S. 3 506 576 décrit un procédé pour nettoyer une surface métallique à base de fer, utilisant une solution aqueuse alcaline d'un agent chélatant d'acide alkylène polyamine polyacétique avec un sulfure soluble dans l'eau.

Le brevet U.S. 4 632 705 décrit un procédé pour éliminer des dépôts de type fer ou cuivre à partir du circuit secondaire des générateurs nucléaires de vapeur.

Ce procédé utilise un chauffage primaire et une ébullition pour transporter et concentrer l'agent de nettoyage dans les zones restreintes du générateur.

La présente invention est destinée à établir une couche d'oxyde protectrice sur toutes les surfaces d'acier au carbone après un nettoyage chimique.

Une certaine élimination des dépôts de cuivre se produit comme effet secondaire.

Le procédé de l'art antérieur est spécifiquement conçu pour éliminer des dépôts de type fer et cuivre à l'intérieur de zones restreintes (fissurées).

Selon ce procédé, on chauffe l'agent de nettoyage en utilisant des systèmes de chauffage externes.

Alors que le procédé de l'art antérieur chauffe l'agent de nettoyage en utilisant un chauffage principal en boucle, le procédé de l'invention chauffe l'agent de nettoyage en utilisant un chauffage principal en boucle, seulement lorsque ceci est nécessaire, pour établir la température d'application requise de 37 à 49 °C.

L'art antérieur chauffe l'agent de nettoyage pour induire une ébullition. Le nouveau procédé purge périodiquement également le générateur de vapeur pour libérer les gaz produits.

Le procédé de l'art antérieur enfin réduit la pression pour induire une ébullition et possède des exigences de pression spécifiques (au-dessus et au-dessous de la pression atmosphérique). L'invention est appliquée à la pression atmosphérique.

Le brevet U.S. 5 225 087 décrit un procédé de récupération d'EDTA à partir des solutions de nettoyage chimique et de décontamination.

L'EDTA est précipité en réduisant le pH à moins de 2. Le procédé de l'invention utilise l'EDTA pour établir une couche d'oxyde protectrice à la suite de l'élimination des dépôts de fer pendant le nettoyage chimique et ne propose pas de procédé pour récupérer la solution de passivation afin de faciliter sa destruction ou sa réutilisation.

L'art antérieur propose une récupération de la solution une fois que le nettoyage chimique est achevé pour faciliter sa destruction ou sa réutilisation. Le procédé de l'invention est également appliqué dans le générateur de l'art antérieur, alors que le procédé antérieur est appliqué à des réservoirs extérieurs au générateur de vapeur.

Dowel Schlumberger (DS) "Passivation of Steel in Ammonium EDTA Solution", présenté du 25 au 29 Mars 1985, à Corrosion 85, décrit un procédé pour passiver un acier après réalisation d'un nettoyage chimique.

L'invention utilise du peroxyde d'hydrogène comme oxydant pour ce procédé, qui ajoute volontairement 800 ppm à 4100 ppm de fer pour atteindre la concentration souhaitée en ions ferriques.

Le nouveau procédé est appliqué dans une gamme de températures allant de 37 °C à 49 °C, tandis que le procédé de DS est appliqué dans une gamme de températures de 54 °C à 77 °C.

Le procédé de l'invention ne demande pas un écoulement continu de la solution de passivation à travers la surface d'acier, alors que le procédé de DS spécifie un débit d'écoulement continu minimal sur la surface d'acier pour assurer une passivation effective.

### Résumé de l'invention

Selon la présente invention, une installation qui doit être nettoyée chimiquement contient un dépôt de cuivre. L'étape finale de dissolution pendant le nettoyage chimique, avant passivation, est une étape de dissolution de ce cuivre, qui utilise l'EDTA à un pH élevé et de l'H₂O₂ comme oxydant.

Cette étape se produit à basse température et, si elle est appliquée selon la présente invention, cette même étape peut agir sur le cuivre comme l'étape de passivation, ce qui élimine la nécessité de toute phase supplémentaire pour passiver les surfaces métalliques.

Si les dépôts dans le générateur de vapeur à nettoyer contiennent du cuivre, une procédure de nettoyage à deux solvants est requise.

Un premier solvant est nécessaire pour une dissolution du cuivre et un second solvant est requis pour une dissolution de la magnétite. Ce solvant pour la dissolution de la magnétite est appliqué à une température de 93 °C (200 °F), tandis que le solvant pour le cuivre est appliqué à des températures inférieures (généralement inférieures à 38 °C/100 °F).

Les étapes concernant les solvants de magnétite et de cuivre peuvent être appliquées selon toutes combinaisons de séquences alternées. Cependant, lorsqu'on nettoie une unité contenant des dépôts porteurs de cuivre, l'étape de dissolution finale est toujours une étape concernant le cuivre.

Dans la méthode EPRI/SGOG, après application de l'étape concernant le cuivre, il est nécessaire de chauffer l'unité pour l'étape finale de passivation EPRI/SGOG. Cette étape d'élimination du cuivre selon EPRI/SGOG, utilise un solvant de la composition nominale suivante : EDTA (acide éthylènediaminetétraacétique) - 50 grammes par litre ; peroxyde d'hydrogène H₂O₂ - 30 grammes par litre ; pH de 9,2 à 9,5, ajusté avec de l'EDA (hydroxyde d'ammonium et d'éthylènediamine).

Le solvant pour le cuivre commence à agir à environ 50 g/l d'EDTA libre. Lorsque la concentration en cuivre arrête de croître, une passivation effective selon la présente invention peut alors progresser à une concentration inférieure ou égale à 15 g/l d'EDTA libre, mais avec une concentration minimale en EDTA d'environ 1 g/l.

L'EDTA libre signifie de l'EDTA non complexé par un métal.

Aucun inhibiteur n'est requis lorsqu'on utilise cette solution, à cause du pH élevé et des propriétés d'oxydation forte du solvant. La présente invention utilise cette solution pour passiver les surfaces de générateur de vapeur, comme extension du procédé de dissolution du cuivre.

L'étape d'application concernant le cuivre peut être appliquée de manière à atteindre une passivation suffisante des surfaces métalliques pour éliminer la post-rouille.

L'élimination de l'étape de passivation finale par N₂H₄ réduit les volumes de résidus et élimine également le placage de cuivre qui se produit pendant cette étape.

Le scénario optimal d'application destiné à l'étape finale concernant le cuivre consistera à appliquer d'abord le solvant de façon normale. Cela correspond aux concentrations chimiques normales décrites ci-dessus, à une température inférieure à 29 °C (85 °F).

Lorsque la concentration en cuivre arrête de croître et que l'EDTA libre tombe au-dessous de 15 g/l (après environ 3 heures), on élève la température du solvant à environ 49 °C (120 °F) et ensuite, on ramène le peroxyde d'hydrogène à environ 20 g/l. Cela assure une passivation efficace des surfaces métalliques.

Cependant, d'autres modifications, telles qu'un retour à des températures inférieures, conduisent également à une passivation des surfaces métalliques.

En conséquence, un but de la présente invention est de fournir un procédé pour passiver chimiquement les surfaces d'un générateur nucléaire de vapeur, consistant à la suite d'une étape d'élimination du cuivre, à appliquer aux surfaces une solution de passivation qui comprend de l'EDTA et de l'H₂O₂.

Un autre but de la présente invention est d'appliquer la solution de passivation à une température d'environ 37 °C à 49 °C.

Les divers aspects nouveaux qui caractérisent l'invention sont signalés dans les revendications annexées à, et faisant partie de, cette description.

Pour une meilleure compréhension de l'invention, ces avantages et ces buts spécifiques de fonctionnement, obtenus par ses applications, référence est faite au texte descriptif, dans lequel un mode préféré de réalisation est décrit.

### Description des modes préférés de réalisation

La présente invention comprend un procédé et une solution à utiliser dans le procédé qui est appliqué à la suite d'une étape d'élimination de cuivre par le nettoyage d'un générateur de vapeur standard EPRI/SGOG ou analogue.

Dans ce procédé, on utilise de l'acide EDTA.

Le procédé de l'invention utilise une préparation ou une réinjection de solvant, en vue de produire une concentration initiale en peroxyde d'hydrogène située dans la gamme de 2 ± 0,5 % (en poids par volume) de H₂O₂ et un pH de 9,0 ± 0,5, ajusté en utilisant de l'EDA.

Les surfaces à passiver selon l'invention sont exposées à la solution pendant au moins deux heures à une température située entre 37 ° C et 49 °C, en présence d'au plus 15 g/l d'EDTA libre, présent sous forme de (NH₄)₂ EDTA.

Les conditions de pression ambiantes peuvent être utilisées (nominalement 1 bar) mais aucun constituant chimique dépendant de la pression n'est présent dans la solution.

La concentration en peroxyde et le pH diminuent au cours du temps ; toutefois, pourvu que la température soit maintenue dans la gamme spécifiée pendant le laps de temps donné, une couche de passivation (FeOFe₂O₃) est formée.

Si la température est extérieure à la gamme, une couche de passivation efficace n'est pas obtenue. Dans le cas où une étape d'élimination de cuivre n'est pas requise, le (NH₄)₂ EDTA n'a pas besoin d'être ajouté au-dessus de la concentration de 15 g/l. Cependant, les autres paramètres restent inchangés.

Dans un test pour vérifier le procédé de passivation de la présente invention, deux définitions de celle-ci sont utilisées.
DEFINITION 1 : Un métal actif de la série emf, ou un alliage composé de ces métaux, est considéré passif lorsque son comportement électrochimique approche celui d'un métal noble, moins actif de façon notable.
DEFINITION 2 : Un métal ou un alliage est passif s'il résiste de façon importante à la corrosion dans des environnements où, de façon thermodynamique, il existe une grande diminution d'énergie libre associée au passage de l'état métallique aux produits de corrosion appropriés.

La solution de passivation et d'élimination du cuivre a été formulée, de la façon décrite ci-dessus.

Un test électrochimique (impédance en courant alternatif, ampérométrie à résistance nulle, et polarisation linéaire) a été utilisé pour déterminer la passivation selon la définition 1. Un test de corrosion atmosphérique accéléré a été utilisé pour évaluer le comportement passif des métaux, après exposition à la solution de passivation. Ceci a été réalisé pour déterminer la passivation selon la définition 2.

Les vitesses de corrosion venant de l'ensemble des mesures électrochimiques vérifient la passivation, selon la définition 1, dans le solvant de cuivre testé.

Dans le test de corrosion atmosphérique accéléré, tous les échantillons, à partir des expositions au solvant de cuivre, fournissent un certain degré de protection, par opposition aux échantillons de contrôle (aucune exposition à un nettoyage chimique).

De plus, il est évident que le traitement avec de l'H₂O₂, à une température élevée, à la fin du cycle concernant le cuivre, améliore l'efficacité de la couche passive résultante contre la rouille de l'acier au carbone sous-jacent.

Ce test a vérifié la passivation selon la définition 2. En utilisant l'étape finale concernant le cuivre comme solution de passivation, on réduit le temps de nettoyage et la production du volume de résidus. Ceci est réalisé par une élimination de l'étape de passivation EPRI/SGOG, qui requiert un chauffage et un refroidissement ultérieur du générateur de vapeur (gain de temps).

Les volumes de résidus sont également réduits en éliminant une étape de nettoyage. Une étape séparée, par définition, augmente la production du volume de résidus pendant le nettoyage chimique. Un autre bénéfice est l'élimination du placage de cuivre, qui peut se produire pendant l'étape normale de passivation.

La solution de passivation de N₂H₄ à 93 °C (200 °F) décrite précédemment est d'application courante aujourd'hui pour le nettoyage chimique des générateurs nucléaires de vapeur.

D'autres solutions ont été mises en oeuvre pour une application aux chaudières utilisant des matières fossiles. Ces variantes comprennent des additifs tels que NaNO₂ utilisés avec barbotage d'air. Des nettoyages de matières fossiles ont également utilisé de l'H₂O₂, dans des solutions de passivation (W.W. Frenier et W.C. Kennedy, "Passivation of Steel in Ammonium EDTA Solutions", NACE Corrosion 85 Boston Massachusetts, mars 1985, Article 189).

Tandis qu'un mode spécifique de réalisation de l'invention a été présenté et décrit en détail pour illustrer l'application des principes de l'invention, on comprendra que celle-ci peut être réalisée autrement, sans s'éloigner de ceux-ci.

## Revendications

1. Procédé pour passiver chimiquement des surfaces d'un générateur nucléaire de vapeur, comprenant les étapes consistant :
après une étape d'élimination de cuivre, si cela est requis ;
à appliquer à ces surfaces une solution de passivation qui comprend de l'EDTA diammonium et de l'H₂O₂.

2. Procédé selon la revendication 1, dans lequel on ajuste le pH de la solution à environ 9,0 ± 0,5, en utilisant de l'EDA.

3. Procédé selon l'une des revendications 1 ou 2, dans lequel on expose les surfaces à la solution pendant une période d'au moins deux heures et à une température comprise entre 37 °C et 49 °C.

4. Procédé selon l'une quelconque des revendications 1 à 3, dans lequel l'H₂O₂ est initialement présent dans une quantité voisine de 2 ± 0,5 % (poids/volume).

5. Procédé selon l'une quelconque des revendications 1 à 4, dans lequel l'EDTA diammonium est présent avec une concentration de l'EDTA inférieure ou égale à 15 grammes par litre de solution.

6. Solution pour passiver des surfaces de générateur nucléaire de vapeur, conformément au procédé selon l'une quelconque des revendications 1 à 5, caractérisée en ce qu'elle comporte de l'(NH₄)₂EDTA, ajusté à l'EDA pour obtenir un pH de 9,0 ± 0,5, la solution incluant de l'H₂O₂ présent avec une teneur d'environ 2 ± 0,5 % (poids/volume).

7. Solution selon la revendication 6, caractérisée en ce que sa concentration en EDTA est inférieure ou égale à 15 grammes par litre.
